# EUROPEAN PATENT APPLICATION

(11) **EP 2 071 431 A1**
(43) Date of publication of application: **17.06.2009**
(21) Application number: 06810799.4
(22) Date of filing: 28.09.2006
(51) Int. Cl.: G06F 3/02, H04M 1/22, H04M 1/73

(54) **KEY BACKLIGHT CONTROLLER, PORTABLE TERMINAL, KEY BACKLIGHT CONTROL METHOD, AND KEY BACKLIGHT CONTROL PROGRAM**

(71) Applicant: Panasonic Corporation, Kadoma-shi Osaka 571-8501 (JP)
(72) Inventor: NISHI, Daisuke Panasonic Corp. IPROC, Osaka 540-6207 (JP); ASAI, Yutaka Panasonic Corp. IPROC, Osaka 540-6207 (JP)
(74) Representative: Grünecker, Kinkeldey, Stockmair & Schwanhäusser Anwaltssozietät
(86) International application number: PCT/JP2006/319352
(87) International publication number: WO 2008/038381

(57) **Abstract**

A key backlight controller, a portable terminal, a key backlight control method, and a program which reduce a consumption current during key operation. A key backlight controller (100) comprises a key input section (120) for inputting data by key depression, a key backlight section (140) for illuminating the key input section (120), a time measurement section (130) for clocking a certain period of time from the key depression, and a key backlight operation control unit (110) for performing a key backlight control to turn off the backlight section (140) for a certain period of time during which the time measurement section (130) measures when the key depression by the key input section (120) is detected while the backlight operates.

## Description

### Technical Field

The present invention relates to a key backlight control apparatus, portable terminal apparatus, key backlight control method, and key backlight control program that perform illumination of an operating section.

### Background Art

In recent years, portable terminals equipped with information terminal functions such as a mail function have also come to offer a WEB function, game function, and so forth in addition to a mail function, and time spent performing key operations on an operating section has increased. Also, it has become common for mobile phones to have a key backlight section that performs illumination of the rear of the operating section for the purpose of improving key operations.

Since operating a key backlight consumes a considerable consumption current, increased key operation time has a major effect on terminal battery life.

Heretofore, there has been an method described in Patent Document 1, for example, as a key backlight control method of this kind.

FIG.1 is a drawing explaining the key backlight control method described in Patent Document 1.

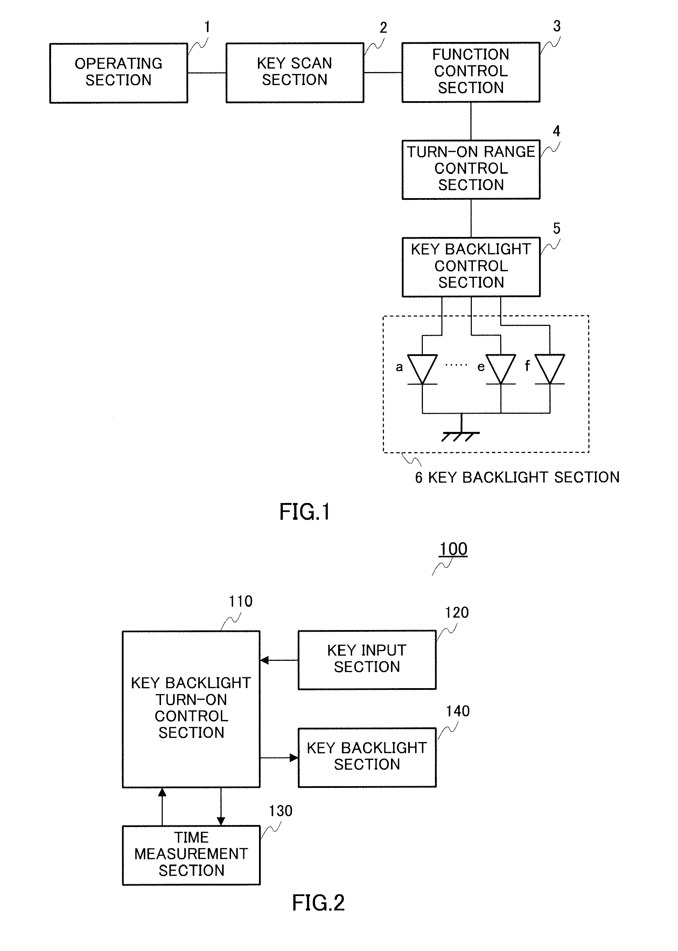

In FIG.1, a mobile phone having a key backlight control function is equipped with operating section 1 comprising various keys, key backlight section 6 that performs illumination of operating section 1, key scan section 2 that detects a signal output from operating section 1 and outputs a signal according to a detection result, function control section 3 that judges a function selected by a user based on the signal from the key scan section, turn-on range control section 4 that determines a turn-on range of the key backlight section based on a function judged by function control section 3, and key backlight control section 5 that turns on key backlight section 6 only in a turn-on range determined by turn-on range control section 4.

When a key on operating section 1 is depressed, key scan section 2 detects which key has been depressed. Function control section 3 judges which function has been selected based on the key scan section 2 detection result, and turn-on range control section 4 determines the turn-on range of key backlight section 6 corresponding to the judged function. Then key backlight control section 5 performs control of key backlight section 6 based on the turn-on range control section 4 determination result, and key backlight section 6 is thereby turned on only in a restricted range.
Patent Document 1: Japanese Patent Application Laid-Open No.2002-247177

### Disclosure of Invention

### Problems to be Solved by the Invention

However, with a portable terminal apparatus having this kind of conventional key backlight section, since a backlight is turned off only in a predetermined turn-on range including a depressed key, when there is a wide range of key operations, such as in normal use, the backlight actually remains on, and effective power saving is not achieved. For example, with scroll keys, character keys, and the like, a backlight with a turn-on range of each key is turned on, but since these keys are almost always used reciprocally, backlights of each turn-on range actually remain on, and a key backlight control effect is not achieved. Also, a backlight naturally remains on during key depression.

The present invention has been implemented taking into account the problems described above, and it is an object of the present invention to provide a key backlight control apparatus, portable terminal apparatus, key backlight control method, and key backlight control program that enable a consumption current during key operation to be reduced.

### Means for Solving the Problems

A key backlight control apparatus of the present invention employs a configuration having a key input section that inputs data in response to a key depression, a key backlight section that illuminates the key input section, a time measurement section that measures a fixed period of time from the key depression, and a control section that performs key backlight control that turns off the backlight section for the fixed period of time measured by the time measurement section when the key depression is detected by the key input section while the key backlight is on.

A portable terminal apparatus of the present invention employs a configuration having the above-described key backlight control apparatus.

A key backlight control method of the present invention has a step of inputting data in response to a key depression, a step of measuring a fixed period of time from the key depression, and a step of, when the key depression is detected while the key backlight is on, turning off the backlight for the fixed period of time.

From another viewpoint, the present invention is a program for causing a computer to execute the above-described steps.

### Advantageous Effect of the Invention

According to the present invention, a consumption current during key operation can be reduced without impairing key operability by backlight turn-off, and the battery life of a portable terminal apparatus can be extended.

### Brief Description of Drawings

FIG.1 is a drawing explaining a conventional key backlight control method;
FIG.2 is a block diagram showing the configuration of a key backlight control apparatus of Embodiment 1 of the present invention;
FIG.3 is a state transition diagram of an above key backlight control apparatus of Embodiment 1;
FIG.4 is a control timing diagram of an above key backlight control apparatus of Embodiment 1; and
FIG.5 is a block diagram showing the configuration of a key backlight control apparatus of Embodiment 2 of the present invention.

### Best Mode for Carrying Out the Invention

Embodiments of the present invention will now be described in detail with reference to the accompanying drawings.

### (Embodiment 1)

FIG.2 is a block diagram showing the configuration of a key backlight control apparatus of Embodiment 1 of the present invention. A key backlight control apparatus of this embodiment is an example of application to a mobile phone/PHS (Personal Handy-Phone System) portable terminal apparatus.

In FIG.2, key backlight control apparatus 100 is equipped with key backlight turn-on control section 110 that performs key backlight control that turns off a backlight for a fixed period of time when there is a key depression while the key backlight is on, key input section 120 that inputs data in response to a user operation, time measurement section 130 comprising a timer that starts clocking of a first period t1 and a second period t2 shorter than this first period t1 from the time of a key depression, and key backlight section 140 that comprises a white LED or the like and illuminates key input section 120.

When there is a key depression while the key backlight is on, key backlight turn-on control section 110 turns off the backlight for a fixed period of time based on clocking periods t1 and t2 according to time measurement section 130. Specifically, (1) at the time of a key depression the backlight is turned off and clocking of periods t1 and t2 (where t1>t2) is started; (2) when there is a key depression in period t1 while the key backlight is on, the backlight is turned off until the end of period t2; and (3) when there is a key depression in period t1 while the key backlight is on and there is a key depression again in period t2 for which clocking is started by the key depression, the backlight off-state is continued until the end of period t2 for which clocking is started by that key depression. That is to say, when there is a key depression while the key backlight is on, the backlight is turned off, and the backlight off-state is continued while key depressions continue.

Although a description is given here taking a key depression as an example, it goes without saying that this can be applied to key operations in general.

When key backlight control apparatus 100 is applied to a mobile phone, key input section 120 actually comprises cursor keys that move a selection object in up/down/left/right directions, an execution key that decides a selected operation in response to a depression, and dial keys comprising membrane keys for telephone number input and suchlike dialing.

Key backlight turn-on control section 110 and time measurement section 130 may be configured by logic circuitry or may be implemented by software. For example, when key backlight control apparatus 100 is applied to a mobile phone, it is possible for key backlight turn-on control section 110 and time measurement section 130 to be implemented using a processing function of a control section comprising a CPU that controls the entire mobile phone.

The operation of a key backlight control apparatus configured as described above will now be explained.

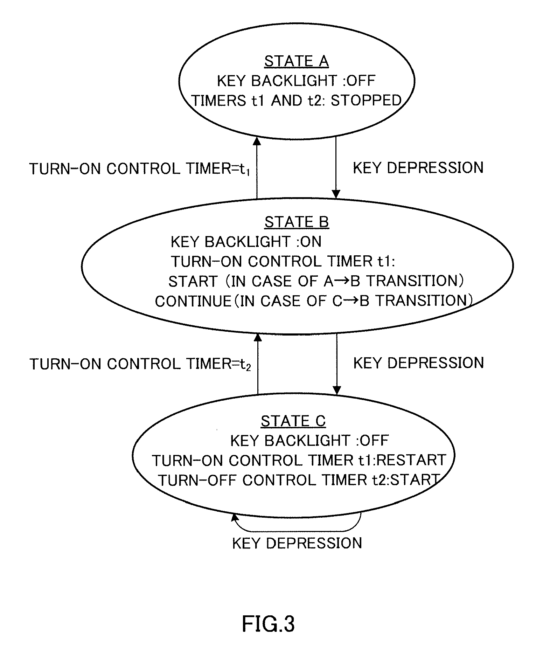

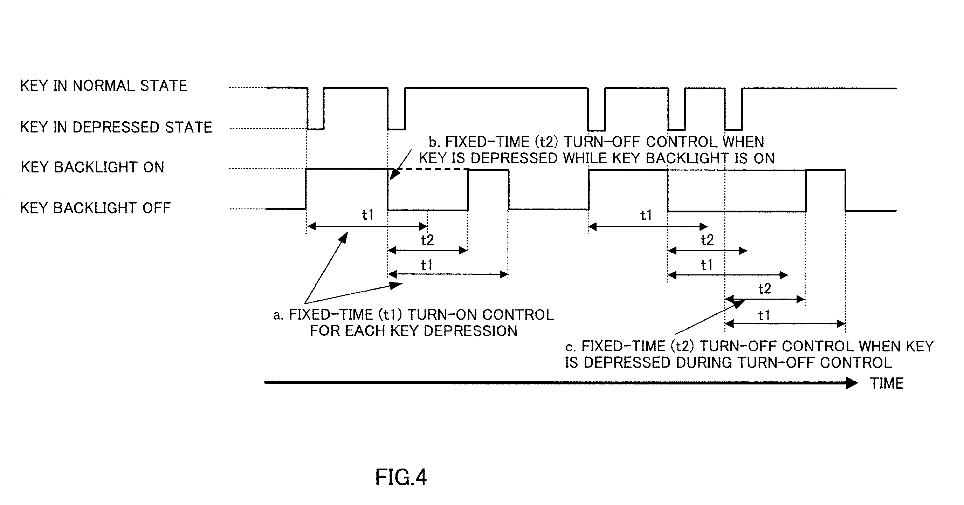

FIG.3 is a key backlight control apparatus state transition diagram, and FIG.4 is a key backlight control apparatus control timing diagram.

Key backlight turn-on control section 110 receives a key depression from key input section 120, starts first period t1 and second period t2 timer operations by time measurement section 130, and performs key backlight turn-on control that turns on or turns off key backlight section 140 based on timer output from time measurement section 130.

Time measurement section 130 starts clocking of first period t1 and second period t2 at the time of a key depression. First period t1 is longer than second period t2 (t1>t2), and second period t2 backlight turn-off control is prioritized over first period t1 backlight turn-on control. In the state transition diagram in FIG. 3, a timer operation that clocks first period t1 is called a turn-on control timer t1 operation, and a timer operation that clocks second period t2 is called a turn-off control timer t2 operation.

As shown in FIG. 3, key backlight control apparatus 100 transits between state A, state B, and state C according to a key depression, and in state C transits within state C. Key backlight control apparatus 100 transits between state C, state B, and state A according to turn-off control timer t2 and turn-on control timer t1 operations. State A is a "Key backlight: Off", "Timers t1 and t2: Stopped" state. State B is a "Key backlight : On", "Turn-on control timer t1: Start (in the case of an A→B transition), Continue (in the case of a C→B transition) " state. State C is a "Key backlight: Off", "Turn-on control timer t1: Restart/Turn-off control timer t2: Start" state.

When a key is depressed while key backlight control apparatus 100 is in state A, key backlight control apparatus 100 transits to state B due to the key depression, the key backlight is turned on, and turn-on control timer t1 is started.

When a key is depressed while key backlight control apparatus 100 is in state B, key backlight control apparatus 100 transits to state C due to the key depression, the key backlight is turned off and turn-on control timer t1 is restarted, and turn-off control timer t2 is started.

If there is a key depression when key backlight control apparatus 100 has transited to state C, key backlight control apparatus 100 does not transit to state B, but transits within state C. Key depressions in state C cause repetitions of a turn-on control timer t1 restart and a turn-off control timer t2 start. The key backlight is kept turned off.

A transition from state C to state B occurs when turn-off control timer t2 has clocked second period t2. When turn-off control timer t2 has clocked second period t2 in state C, key backlight control apparatus 100 transits to state B.

In state B to which a transition has been made from state C, the key backlight is turned on, and clocking of turn-on control timer t1 is continued. Therefore, state B to which a transition has been made from state A and state B to which a transition has been made from state C are the same in that the key backlight is turned on, but differ in that turn-on control timer t1 is started in the former case, whereas turn-on control timer t1 clocking is continued in the latter case. If a key is depressed while key backlight control apparatus 100 is in state B, key backlight control apparatus 100 transits to state C as described above.

If there is no key depression in state B, and turn-on control timer t1 clocks first period t1, a transition is made to state A. State A is a key backlight off-state when there is no actual key depression.

The above states will now be described in terms of timing control.

Key backlight turn-on control section 110 turns on key backlight section 140 when a key is depressed at first timing, as indicated by "A." in FIG.4. Also, at the time of a key depression, time measurement section 130 starts clocking of first period t1 and second period t2. If a key is depressed at second timing indicated by "B." in FIG.4 while key backlight section 140 is on, key backlight section 140 is turned off for a fixed period of time (second period t2), after which (following the elapse of second period t2) key backlight section 140 is turned on, and is kept turned on until the end of first period t1 started by the key depression at the second timing.

The bold dashed line in FIG.4 indicates a backlight on-state according to an example of the prior art, and to give a comparative description, when a key is depressed in the example of the prior art, the key backlight section is turned on, and the key backlight section remains turned on irrespective of whether or not there is a subsequent key depression. With this embodiment, when a key is depressed at first timing and a key is depressed from second timing onward while key backlight section 140 is still turned on, key backlight section 140 is turned off for a fixed period of time (second period t2), thereby enabling the consumption current to be reduced due to the off-state of the key backlight for the period of time indicated by the dashed line at "B." in FIG.4. In a case such as when a key is depressed consecutively - that is, a case such as when a user is performing blind touch operation - it is assumed that the user is proficient at the relevant key operation. In this case, it is judged that the user can perform key operations easily even if there is no key backlight illumination by key backlight section 140, and key backlight section 140 is turned off.

Also, when a key is depressed at third timing during turn-off control, as indicated by "C." in FIG.4, clocking of first period t1 and second period t2 is restarted from that point in time, and the key backlight off-state is continued until the end of second period t2.

The above operation will now be described using actual numeric values.

For example, a case will be described by way of example in which period t1 is 3 seconds, period t2 is 2 seconds, and there is a second depression 2 seconds after the first key depression, and a third depression 3 seconds after.

In an example of the prior art, the total time measured in period t1 is 6 seconds, and the key backlight is on for these 6 seconds. In this embodiment, the key backlight is off for the 2-second duration of period t2 from the point in time of the second key depression, and is further off for a total of 3 seconds comprising the time measured in period t2 from the third key depression. Thus, the on-time of key backlight section 140 is shortened, and in line with this the power consumption of key backlight section 140 is reduced.

As described above, according to this embodiment, when key backlight turn-on control section 110 detects a key depression by key input section 120 while the key backlight is on, key backlight control apparatus 100 performs key backlight control that turns off key backlight section 140 for a fixed period of time measured by time measurement section 130, so that when a user can grasp key positions, such as when depressing the same key consecutively, it can be judged unnecessary to turn on the key backlight, and key backlight section 140 can be turned off. By this means, a consumption current during key operation can be reduced without impairing key operability by backlight turn-off, and there is an effect of extending the battery life of a device subject to control (here, a portable terminal).

Also, rather than performing backlight control of a turn-on range of each key, as in the example of the prior art, backlight turn-off is executed when there is a key depression irrespective of the type of key, enabling effective backlight control to be achieved.

Furthermore, this embodiment can be implemented without the addition of a member, providing an excellent effect of enabling easy introduction without entailing increased cost, and without entailing modification of the design of an existing portable terminal apparatus. For example, implementing key backlight control apparatus 100 in the control section of a mobile phone can be achieved easily without an increase in cost.

Thus, a keybacklight control apparatus and method of this embodiment are particularly suitable for use with a mail function, game function, short message function, or the like of a mobile phone, which feature short key depression intervals and many consecutive depressions of the same key.

### (Embodiment 2)

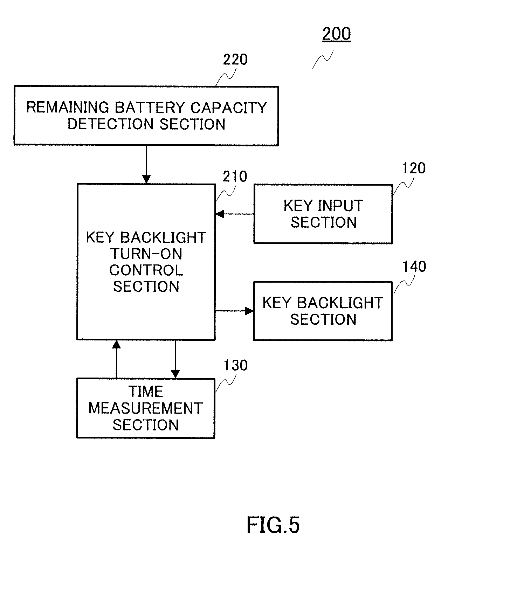

FIG.5 is a block diagram showing the configuration of a key backlight control apparatus of Embodiment 2 of the present invention. Configuration parts identical to those in FIG.2 are assigned the same reference codes as in FIG.2, and duplicate descriptions are omitted here.

In Fig.5, key backlight control apparatus 200 is equipped with key backlight turn-on control section 210 that performs key backlight control that turns off a backlight for a fixed period of time when there is a key depression while the key backlight is on, remaining battery capacity detection section 220 that detects the remaining battery capacity of a mobile phone, key input section 120 that inputs data by user operation, time measurement section 130 that clocks first period t1 and short second period t2 from the time of a key depression, and key backlight section 140 that illuminates key input section 120.

Key backlight turn-on control section 210 performs the backlight turn-off control only if remaining battery capacity detected by remaining battery capacity detection section 220 is less than or equal to a fixed value.

According to this embodiment, this backlight turn-off control is executed when the remaining battery capacity becomes low, and battery operation time can be extended in a situation in which the remaining battery capacity is low.

The above description presents examples of preferred embodiments of the present invention, but the scope of the present invention is not limited to these. For example, examples have been described in which the present invention is applied to a mobile phone as a portable terminal apparatus, but application is not limited to mobile phones, and is also possible for portable terminal apparatuses such as PDAs (Personal Digital Assistants), portable game machines, personal computers, apparatuses amalgamating these, and so forth.

For convenience of description, a key operation has been described using the term "key depression", but this "key depression" can apply not only to a key depression operation in which a key is pressed, but also to key operations in general, such as key touching using a touch sensor, key tapping, key sliding, and so forth.

Period t2, which is a turn-off control time period, may be set by a user or according to a default value, and may be varied dynamically by changing a set value after a user' s key depression interval has been learned, or according to an operating state (for example, when a mobile phone mail function, game function, or short message function application is executed), and so forth.

A mode may also be used in which this key backlight control functions only with specific keys (such as the direction keys of a mobile phone, for example).

A mode may also be used in which, for example, this key backlight control function is canceled in the event of a mobile phone interrupt when an incoming call or mail is received.

The operation example in FIG.4 is only an illustration, and any kind of settings may be used.

In the above embodiments, the terms "keybacklight control apparatus", "portable terminal apparatus", and "key backlight control method" have been used, but this is simply for convenience in describing the embodiments, and terms such as "mobile phone", "information input method", and the like may, of course, also be used.

The type, number, connection method, and so forth of circuit sections - for example, the time measurement section and the like - configuring an above-described key backlight control apparatus are not limited to those in the above embodiments.

The above-described key backlight control method is also implemented by a program for causing the key backlight control method to function. This program is stored in a recording medium that can be read by a computer.

### Industrial Applicability

A key backlight control apparatus, portable terminal apparatus, and key backlight control method according to the present invention enable key backlight power consumption to be suppressed, and are therefore effective in achieving overall terminal power saving for portable terminal apparatuses including mobile phones equipped with a key backlight. Incorporation in a portable terminal apparatus such as a mobile phone as a key backlight control program is also possible.

## Claims

1. A key backlight control apparatus comprising:
a key input section that inputs data in response to a key depression;
a key backlight section that illuminates said key input section;
a time measurement section that measures a fixed period of time from a time of said key depression; and
a control section that performs key backlight control that turns off said backlight section for said fixed period of time measured by said time measurement section when said key depression by said key input section is detected while the key backlight is on.

2. The key backlight control apparatus according to claim 1, further comprising a time period setting section that sets said fixed period of time measured by said time measurement section according to a user setting, said key depression interval, or an operating state of various functions.

3. The key backlight control apparatus according to claim 1, further comprising a remaining battery capacity detection section that detects remaining battery capacity of a device subject to control,
wherein said control section performs said key backlight control when detected said remaining battery capacity is less than or equal to a predetermined value.

4. A portable terminal apparatus comprising the key backlight control apparatus according to claim 1.

5. A key backlight control method comprising:
a step of inputting data in response to a key depression;
a step of measuring a fixed period of time from a time of said key depression; and
a step of, when said key depression is detected while the key backlight is on, turning off said backlight for said fixed period of time.

6. A program for causing a computer to execute:
a step of inputting data in response to a key depression;
a step of measuring a fixed period of time from a time of said key depression; and
a step of, when said key depression is detected while the key backlight is on, turning off said backlight for said fixed period of time.
